# EUROPÄISCHE PATENTANMELDUNG

(11) **EP 0 984 611 A1**
(43) Veröffentlichungstag der Anmeldung: **08.03.2000**
(21) Anmeldenummer: 99115145.7
(22) Anmeldetag: 10.08.1999
(51) Int. Cl.: H04M 17/02

(54) **Aus einem Wertkartenfernsprecher und einem ihm zugeordneten Münzmodul bestehendes Kommunikationsendgerät**

(30) Priorität: 31.08.1998 DE 19839610
(71) Anmelder: SIEMENS AKTIENGESELLSCHAFT, 80333 München (DE)
(72) Erfinder: Eitel, Peter, 85649 Brunnthal (DE); Brandstetter, Alfred, 82140 Olching (DE); Honsel, Sigolf, 81369 München (DE)

(57) **Zusammenfassung**

Zweck der vorliegenden Erfindung ist es, zu Wartungszwecken einen leichten Zugang zu den im Münzmodul (3) angeordneten Komponenten zu ermöglichen.

Zu diesem Zweck ist das Münzmodul (3) aus einem festen, mit dem Wertkartenfernsprecher (2) verbundenen äußeren Gehäuse (7) sowie einem in diesem Gehäuse (7) verschiebbar angeordneten Träger (8) aufgebaut. An dem Träger (8) sind alle zum Betrieb des Münzmoduls (3) erforderlichen Komponenten angeordnet.

## Beschreibung

Die vorliegende Erfindung betrifft ein aus einem Münzmodul und einem damit verbundenen Wertkartenfernsprecher bestehendes Kommunikationsendgerät.

Es wurde bereits ein Kommunikationsendgerät vorgeschlagen, bei dem der Wertkartenfernsprecher aussermittig auf dem Münzmodul angeordnet ist, so daß in dem frei zugänglichen Bereich des Münzmoduls der Münzeinwurfschlitz sowie die Münzrückgabe angeordnet werden konnten. Sowohl der Wertkartenfernsprecher als auch das Münzmodul sind dabei als zweiteiliges Gehäuse gestaltet, deren Gehäusehälften jeweils über Scharniere schwenkbar miteinander verbunden sind. Dadurch war es möglich, an die im Gehäuseinneren angeordneten und für den Betrieb der Geräte erforderlichen mechanischen, elektrischen und elektronischen Komponenten zu gelangen, die im Bedarfsfall getauscht, gereinigt oder repariert werden konnten. Weiterhin bestand die Möglichkeit, notwendige Messungen im Betriebszustand durchzuführen.

Es hat sich nunmehr in der Praxis gezeigt, daß die Verwendung von Scharnieren bei dem Münzmodul mit Problemen behaftet ist. Aufgrund des relativ großen Gewichtes der heutzutage zum Einsatz gelangenden Wertkartenfernsprecher müssen diese Scharniere für eine sehr große mechanische Belastung ausgelegt werden, was aufgrund der Dimensionierung der Scharniere zu einem optisch ungünstigen Aussehen des Münzmoduls führen würde. Derartig dimensionierte Scharniere haben außerdem einen erhöhten Platzbedarf zur Folge.

Der vorliegenden Erfindung liegt daher die Aufgabe zugrunde, durch Einsatz einfacher konstruktiver Mittel Wartungsarbeiten an den genannten Komponenten im Münzmodul zu ermöglichen.

Gemäß der Erfindung wird diese Aufgabe dadurch gelöst, daß das Münzmodul aus einem äußeren Gehäuse und einem in diesem Gehäuse verschiebbar gelagerten Träger gebildet ist, wobei auf dem Träger alle zum Betrieb des Münzmoduls erforderlichen mechanischen, elektrischen und elektronischen Komponenten angeordnet sind.

Durch eine derartige Gestaltung des Münzmoduls wird der Zugriff zu den mechanischen, elektrischen und elektronischen Komponenten des Münzmoduls durch einfaches Verschieben des Trägers aus dem Gehäuse ermöglicht. Dabei kann der Träger jeweils so innerhalb des Gehäuses angeordnet werden, daß das Verschieben aufgrund begrenzter Platzverhältnisse in den öffentlichen Fernsprechzellen einmal in vertikaler und zum anderen in horizontaler Lage vorgenommen werden kann. Das Gewicht des Wertkartenfernsprechers wird in diesem Fall nur von dem unbewegten Gehäuse des Münzmoduls aufgefangen.

Wie bei dem bekannten Münzmodul ist auch bei dieser Ausführungsform der Träger im eingeschobenen Zustand (Gebrauchszustand) mit dem Gehäuse über ein Schließsystem verriegelt. Dieses Schließsystem kann nur von einer berechtigten Person entriegelt werden.

Gemäß einer weiteren Ausbildung der Erfindung kann der Träger im herausgezogenen Zustand aus dem Gehäuse senkrecht und/oder axial zu seiner Verschieberichtung verschwenkt werden. Somit kann bei beengten Platzverhältnissen der Träger nochmals gekippt werden, um die eingangs geschilderten Tätigkeiten durchführen zu können. Zur Realisierung dieser Schwenkbewegung bietet sich ein Dreh- und/oder Kippgelenk an.

Die Lagerung und Führung des Trägers im Gehäuse kann über im Handel erhältliche Gleit- oder Teleskopschienen erfolgen. Hierbei besteht einmal die Möglichkeit, diese Gleit- oder Teleskopschienen am Träger selbst und dem Gehäuse zu befestigen, wenn es darum geht, den Träger ohne Verschwenken nur in einer vertikalen oder horizontalen Lage zu verschieben.

Soll jedoch die weitere Möglichkeit des Verschwenkens eingeschlossen werden, so wird der Träger über das Dreh- oder Kippgelenk mit einem zusätzlichen Führungsteil verbunden. Dieser Führungsteil ist wiederum mit dem Gehäuse über die Gleit- oder Teleskopschienen verbunden.

Gemäß einer weiteren Ausgestaltung der Erfindung kann das Münzmodul an seiner der Wandbefestigung in der Telefonzelle dienenden Gehäuserückwand mit einem Drehgelenk versehen werden. Durch dieses Drehgelenk kann das gesamte Kommunikationsendgerät im Bedarfsfall um einen gewünschten Winkel in eine montagefreundliche Lage verschwenkt werden.

Weitere vorteilhafte Ausgestaltungen der Erfindung können den Unteransprüchen und der Beschreibung entnommen werden.

Die Erfindung soll im folgenden anhand eines Ausführungsbeispiels näher erläutert werden.

Es zeigt jeweils in einer perspektivischen Darstellung
Figur 1 das aus einen Wertkartenfernsprecher und einem Münzmodul bestehende Kommunikationsendgerät im Gebrauchszustand in einer Ansicht von vorn;
Figur 2 das Kommunikationsendgerät nach Figur 1 mit aus dem Münzmodul herausgezogenem Träger in einer Ansicht von vorn;
Figur 3 das Kommunikationsendgerät nach Figur 1 mit aus dem Münzmodul herausgezogenem und nach vorne geklapptem Träger in einer Ansicht von hinten.

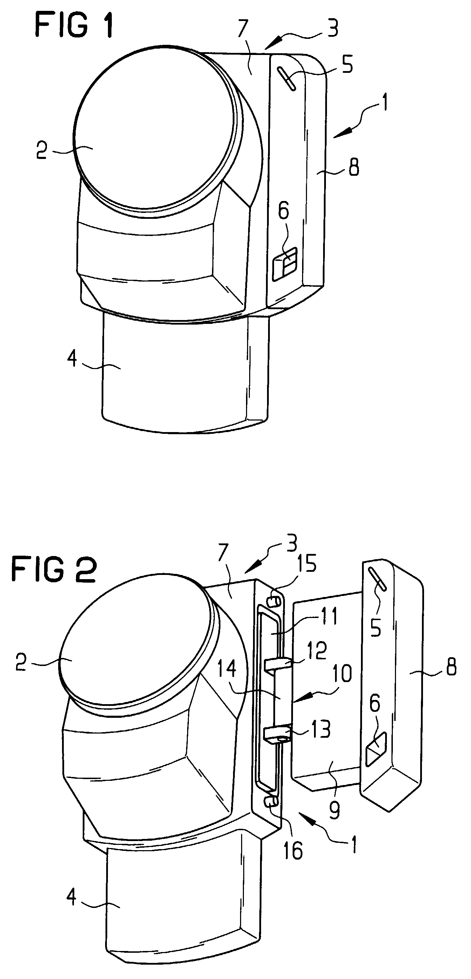

Das in den Figuren dargestellte Kommunikationsendgerät 1 besteht aus einem Wertkartenfernsprecher 2 und einem mit ihm mechanisch und elektrisch verbundenen Münzmodul 3. Hierbei ist der Wertkartenfernsprecher 2 in den Figuren 1 bis 3 nur angedeutet, ohne Details wie Kartenaufnahme, Hörer und Anschlußschnur, Display, Tasten usw. näher zu zeigen.

Wie die Figuren 1 und 2 zeigen, ist der Wertkartenfernsprecher 2 außermittig auf dem Münzmodul 3 angeordnet. Durch diese Plazierung des Wertkartenfernsprecher 2 steht auf der in der Bildebene rechts befindlichen Vorderfront des Münzmoduls 3 hinreichend Platz zur Verfügung, um den als Schlitz gestalteten Münzeinwurf 5 sowie die schachtartige Münzrückgabe 6 vorzusehen. Unterhalb des Münzmoduls 3 ist die die Münzen aufnehmende Münzkassette 4 lösbar und verschließbar mit dem Münzmodul 3 verbunden.

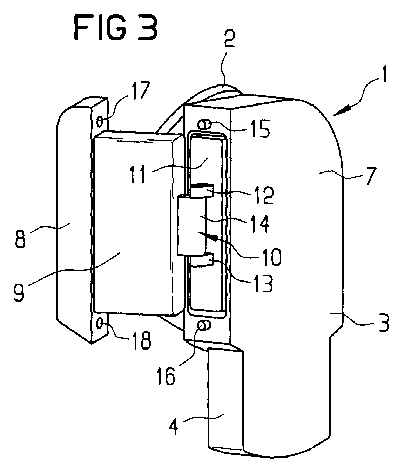

Wie die Figuren 2 und 3 darstellen, besteht das Münzmodul 3 aus einem stabilen, mit dem Wertkartenfernsprecher 2 verbundenen äußeren Gehäuse 7 und einem in diesem Gehäuse 7 verschiebbar gelagerten Träger 8, der alle zum Betrieb des Münzmoduls erforderlichen mechanischen, elektrischen und elektronischen Komponenten aufnimmt. Hierzu gehören z. B. die Münzführung, die Münzprüfung und -registrierung sowie die Rückgabe zuviel gezahlter Münzen. Diese Komponenten sind in dem Bereich 9 des Trägers 8 untergebracht, wobei auch der Münzeinwurf 5 und die Münzrückgabe 6 im verschiebbar gelagerten Träger 8 vorgesehen sind. In dem in Figur 1 gezeigten Gebrauchszustand ist der Träger 8 mit dem Gehäuse 7 z. B. über ein nur von einem Berechtigten zu öffnendes Schließsystem verriegelt. Der Träger 8 ist über ein Kippgelenk 10 mit einem Führungsteil 11 verbunden. Das Kippgelenk 10 besteht aus zwei an dem Führungsteil 11 befestigten Außenstegen 12 und 13 mit Lageraugen sowie einem an dem Bereich 9 des Trägers 8 befestigten Mittelsteg 14, der zwischen den Halteelementen eingreift und eine durchgehende Bohrung aufweist. Die drei Gelenkteile 12, 13, 14 sind über eine Achse miteinander verbunden.

Das Führungsteil 11 ist innerhalb des Rahmens 7 z. B. auf hier nicht näher dargestellten Gleit- bzw. Teleskopschienen geführt und gehaltert, wobei die Gleit- bzw. Teleskopschienen in bekannter Weise einerseits innerhalb des Gehäuses 7 und andererseits an dem Führungsteil 11 befestigt sind.

Ferner sind an dem Gehäuse 7 zwei Zapfen 15 und 16 angeordnet, die im eingeschobenen Zustand des Trägers 8 in zwei am Träger 8 vorgesehene Aufnahmen 17 und 18 (Figur 3) eingreifen. Dadurch wird eine sichere Verbindung zwischen dem Gehäuse 7 und dem Träger 8 erzielt.

Wie die Figur 3 zeigt, kann der Träger zu Wartungszwecken zusätzlich um das Kippgelenk 10 verschwenkt werden, so daß die einzelnen Komponenten des Münzmoduls 3 leichter für den die Wartung Durchführenden erreichbar sind.

## Patentansprüche

1. Aus einem Münzmodul (3) und einem damit verbundenen Wertkartenfernsprecher (2) bestehendes Kommunikationsendgerät (1), **dadurch gekennzeichnet,** daß das Münzmodul (3) aus einem äußeren Gehäuse (7) und einem in diesem Gehäuse (7) verschiebbar gelagerten Träger (8) gebildet ist, wobei auf dem Träger (8) alle zum Betrieb des Münzmoduls (3) erforderlichen mechanischen, elektrischen und elektronischen Komponenten angeordnet sind.

2. Kommunikationsendgerät nach Anspruch 1, **dadurch gekennzeichnet,** daß der Träger (8) im herausgezogenen Zustand aus dem Gehäuse (7) senkrecht und/oder axial zu seiner Verschieberichtung verschwenkbar ist.

3. Kommunikationsendgerät nach Anspruch 2, **dadurch gekennzeichnet,** daß das Verschwenken des Trägers (8) über ein Dreh- oder Kippgelenk (10) erfolgt.

4. Kommunikationsendgerät nach Anspruch 1, **dadurch gekennzeichnet,** daß der Träger (8) mittels Gleit- oder Teleskopschienen im Gehäuse (7) verschiebbar geführt und gehaltert ist.

5. Kommunikationsendgerät nach Anspruch 2 und Anspruch 3, **dadurch gekennzeichnet,** daß der Träger (8) über das Dreh- oder Kippgelenk (10) mit einem Führungsteil (11) verbunden ist, das wiederum mittels Gleit- oder Teleskopschienen im Gehäuse (7) verschiebbar geführt und gehaltert ist.

6. Kommunikationsendgerät nach Anspruch 1, **dadurch gekennzeichnet,** daß am Münzmodul (3) ein Münzeinwurfschlitz (5) und eine Münzrückgabe (6) vorgesehen sind, die am Gehäuse (7) oder am verschiebbaren Träger (8) angeordnet sind.

7. Kommunikationsendgerät nach Anspruch 5, **dadurch gekennzeichnet,** daß das Kippgelenk (10) durch an den Führungsteil (11) angeordnete Außenstege (12, 13) und einem am Träger (8) vorgesehenen und zwischen den Außenstegen (12, 13) eingreifenden Mittelsteg (14) gebildet ist, wobei die Außenstege (12, 13) und der Mittelsteg (14) miteinander über eine Achse verbunden sind.

8. Kommunikationsendgerät nach Anspruch 1 oder Anspruch 2, **dadurch gekennzeichnet,** daß am Träger (8) Aufnahmen (17, 18) für am Gehäuse (7) angeordnete Zapfen (15, 16) vorgesehen sind.

9. Kommunikationsendgerät nach Anspruch 1, **dadurch gekennzeichnet,** daß der Träger (8) im eingeschobenen Zustand (Gebrauchszustand) mit dem Gehäuse (7) über ein Schließsystem verriegelt ist.

10. Kommunikationsendgerät nach Anspruch 1, **dadurch gekennzeichnet,** daß das Münzmodul (3) an seiner der Wandbefestigung dienenden Gehäuserückwand mit einem Drehgelenk versehen ist.
